# EUROPEAN PATENT APPLICATION

(11) **EP 2 687 630 A1**
(43) Date of publication of application: **22.01.2014**
(21) Application number: 12177017.6
(22) Date of filing: 19.07.2012
(51) Int. Cl.: E01C 9/00, E01C 11/22, E04D 13/04, E04D 11/00

(54) **Drainage element**

(71) Applicant: Sell Kunststoffen B.V., 3861 RD Nijkerk (NL)
(72) Inventor: Dullemond Willem, 3871 KS Hoevelaken (NL)
(74) Representative: De Vries & Metman

(57) **Abstract**

A drainage element is presented, comprising a number of adjacent cells which each are provided with a surrounding wall defining a channel through the cell having upper and lower openings. In the lower part of the surrounding wall of each cell at least one passage is provided. Further a permeable sheet-like member may be provided which is attached to the lower edge of the surrounding walls.

## Description

The invention relates to a drainage element, comprising a number of adjacent cells which each are provided with a surrounding wall defining a channel through the cell having upper and lower openings.

Such a drainage element is used to control the distribution and discharge of water, for example rain, to the surroundings. The drainage element may be positioned on a ground surface but also on constructional surfaces, for example roofs of buildings. The cells often will be filled with a. water permeable filler material, for example soil, gravel or alike.

When a known drainage element of such a type is positioned on top of a surface which is not or hardly permeable for water, the problem may arise that the cells entirely become filled with water and that an uncontrolled outflow of water occurs over upper edges of the cells. This may also lead to a wash out of the filler material.

It is an object of the present invention to provide an improved drainage element of the above mentioned type.

Thus, in accordance with the present invention, the drainage element is **characterized in that** in the lower part of the surrounding wall of each cell at least one passage is provided.

The passage allows water to flow from one cell to another, adjacent cell and from cells to the surroundings. This may avoid cells from becoming entirely filled with water and overflowing.

The position of the passage may vary. For example the passage may be provided in the lower half, or even in the lower quarter, of the surrounding wall.

In a preferred embodiment of the drainage element according to the present invention, the passage is positioned at a level above a lower edge of the surrounding wall. This means that the lower edge will not be interrupted by the passages and remains completely functional notwithstanding the presence of the passages (the function of the lower edge, for example, may be to provide a structural element to which another element is to be connected, such as for example a permeable sheet-like member; further, an important function of such a lower edge may be to carry loads and in view thereof it will be clear that an integral lower edge which is not interrupted, is advantageous).

Another consequence of such an elevated position of the passages relative to the lower edge of the surrounding wall is, that the flow of water from one cell to an adjacent cell will not occur immediately, but only after the water in the cell has risen to the level of the lowermost part of the passages.

However, it is possible too, that the passage connects to a lower edge of the surrounding wall. Especially for cells which are fully surrounded by other cells, this often will be the case because of ease of manufacturing the drainage element.

Thus, in a special embodiment of the drainage element according to the present invention, comprising inner cells fully surrounded by other cells and outer cells of which a part of the surrounding wall defines a part of an outer wall of the drainage element, the passage in the inner cells connects to a lower edge of the surrounding wall, wherein the passage in the outer cells is positioned at a level above a lower edge of the surrounding wall and is provided in the part of said surrounding wall defining a part of the outer wall of the drainage element.

In another embodiment of the drainage element at least some cells are provided with a different number of passages and/or passages with different dimensions. This allows to create specific flow characteristics of the water through and out of the drainage element. For example it is conceivable that the effective area of the passages (determined by the cross section and/or number of the passages) increases outwardly towards an outer edge of the drainage element.

The cells may have many shapes and may be arranged in many different patterns. In one embodiment, for example, the cells are hexagonal cells arranged in a honeycomb pattern.

It is noted that the cells not necessarily all should have the same dimensions or shape.

In another embodiment of the drainage element according to the present invention, further a permeable sheet-like member is provided which is attached to the lower edge of the surrounding walls. Such a permeable sheet-like member helps to control the flow of water downwardly out of the drainage element. It also may present a barrier against weeds.

For example, such a permeable sheet-like member may comprise a woven or non-woven fabric material.

The drainage element may come in many shapes, for example a square or rectangular shape.

Hereinafter the invention will be elucidated while referring to the drawing, in which:
Figure 1 is a perspective view of an embodiment of the drainage element according to the present invention;
Figure 2 illustrates a top plan view and a frontal view of the drainage element according to figure 1, and
Figure 3 shows three different positions for a passage.

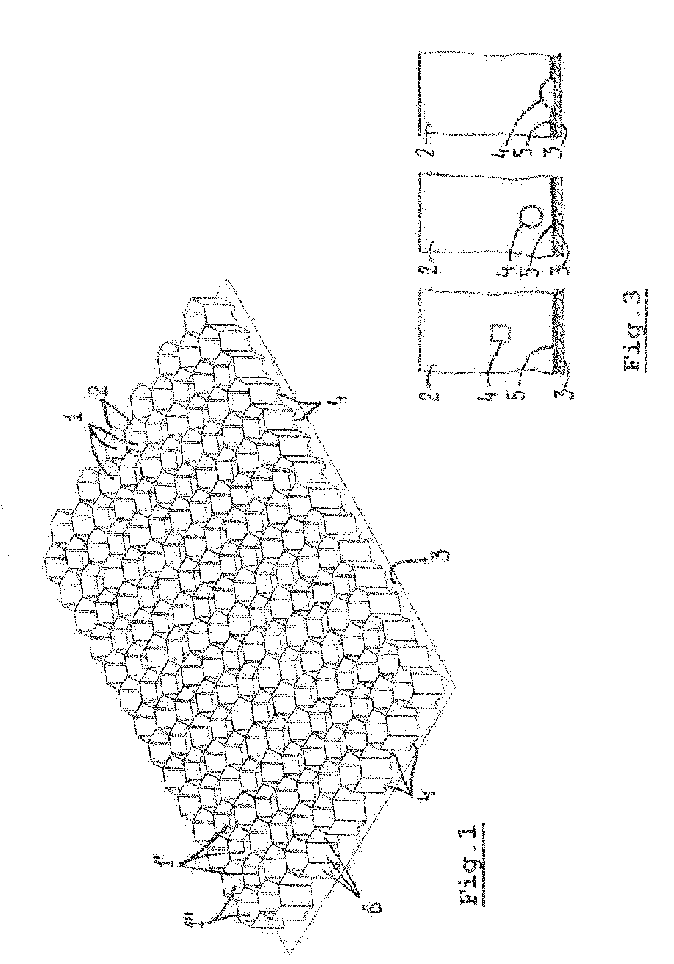

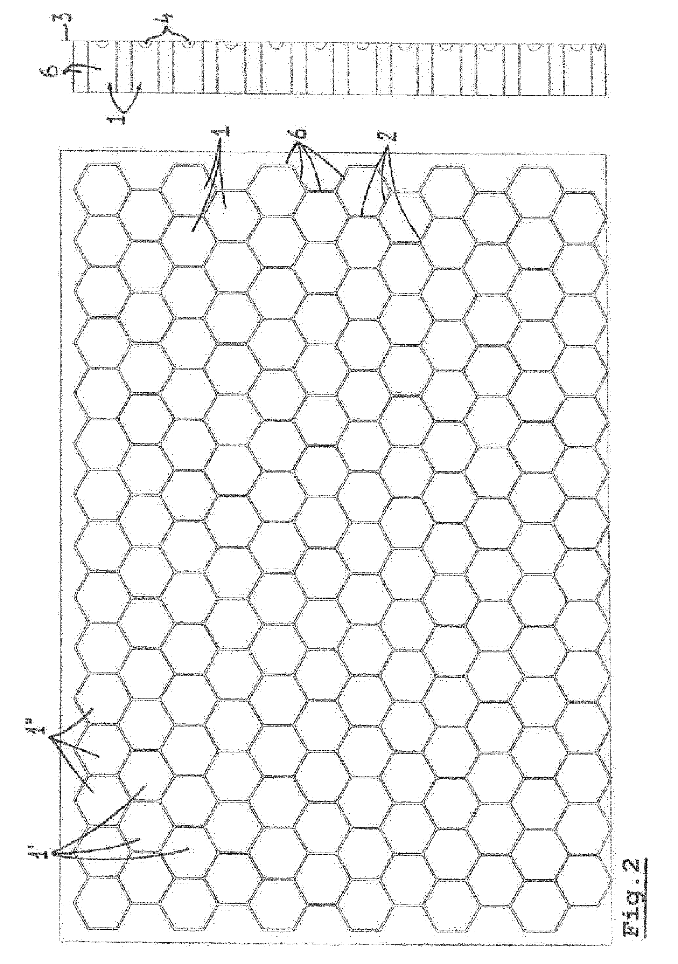

Firstly referring to figures 1 and 2, a drainage element is illustrated, comprising a number of adjacent cells 1,1'and 1"(which in this embodiment are hexagonal cells arranged in a honeycomb pattern) which each are provided with a surrounding wall 2. The surrounding walls 2 define a vertical channel through the cells 1 having upper and lower openings.

The drainage element further is provided with a permeable sheet-like member 3 attached to the lower edge of the surrounding walls 2. For example, said permeable sheet-like member 3 comprises a woven or non-woven fabric material.

In the lower part of the surrounding wall 2 of each cell 1 a passage or hole 4 is provided. Water (for example rain water) entering a cell 1 through the open top (upper opening) of its channel, primarily is intended to gradually leave the cell via the lower opening and the permeable sheet-like member 3. However, if the inflow of water is large or if the drainage element is positioned on top of a surface which is not or only in a very limited manner permeable for water, the water also may migrate from a cell 1 towards an adjacent cell 1 and finally out of the outermost cells through the passages 4.

Figure 3 shows parts of a surrounding wall 2 with passages at different positions. In the left embodiment the passage 4 (which in this case has a square section) is positioned at a level above a lower edge 5 of the surrounding wall 2 in the lower half of the surrounding wall.

In the central embodiment the passage 4 (which in this case has a circular section) is positioned at a reduced level above the lower edge 5 of the surrounding wall 2, substantially in the lower quarter of the surrounding wall 2.

In the right embodiment the passage 4 connects to the lower edge 5 of the surrounding wall 2. Contrary to the previous two embodiments, water will directly flow out of the cell 1 through the passage in this embodiment. In the other two embodiments the water first will have to rise to the level of the lowermost part of the passage 4.

As shown in figure 1, the drainage element comprises inner cells 1' fully surrounded by other cells and outer cells 1" of which a part of the surrounding wall 2 defines a part of an outer wall 6 of the drainage element. An embodiment is conceivable (not illustrated) in which the passage 4 in the inner cells 1' connects to the lower edge 5 of the surrounding wall 2 (figure 3, right), whereas the passage 4 in the outer cells 1" is positioned at an elevated level above a lower edge of the surrounding wall (corresponding to figure 3, left or middle) and is provided in the part of said surrounding wall 2 defining a part of the outer wall 6 of the drainage element.

The invention is not limited to the embodiments described before, which may be varied widely within the scope of the invention as defined by the appending claims. For example, although the drainage element has been illustrated having a square or rectangular shape, also other shapes are conceivable. Further the effective area of the passages may vary among different cells (for example because at least some cells may be provided with a different number of passages and/or passages with different dimensions), and for example may increase outwardly towards an outer edge of the drainage element.

## Claims

1. Drainage element, comprising a number of adjacent cells which each are provided with a surrounding wall defining a channel through the cell having upper and lower openings, **characterized in that** in the lower part of the surrounding wall of each cell at least one passage is provided.

2. Drainage element according to claim 1, wherein the passage is provided in the lower half of the surrounding wall.

3. Drainage element according to claim 2, wherein the passage is provided in the lower quarter of the surrounding wall.

4. Drainage element according to any of the previous claims, wherein the passage is positioned at a level above a lower edge of the surrounding wall.

5. Drainage element according to claim 1, wherein the passage connects to a lower edge of the surrounding wall.

6. Drainage element according to any of the previous claims, comprising inner cells fully surrounded by other cells and outer cells of which a part of the surrounding wall defines a part of an outer wall of the drainage element, wherein the passage in the inner cells connects to a lower edge of the surrounding wall, and wherein the passage in the outer cells is positioned at a level above a lower edge of the surrounding wall and is provided in the part of said surrounding wall defining a part of the outer wall of the drainage element.

7. Drainage element according to any of the previous claims, wherein at least some cells are provided with a different number of passages and/or passages with different dimensions.

8. Drainage element according to claim 7, wherein the effective area of the passages increases outwardly towards an outer edge of the drainage element.

9. Drainage element according to any of the previous claims, wherein the cells are hexagonal cells arranged in a honeycomb pattern.

10. Drainage element according to any of the previous claims, further provided with a permeable sheet-like member which is attached to the lower edge of the surrounding walls.

11. Drainage element according to claim 10, wherein the permeable sheet-like member may comprise a woven or non-woven fabric material.

12. Drainage element according to any of the previous claims, having a square or rectangular shape.
